# EUROPÄISCHE PATENTSCHRIFT

(11) **EP 1 626 857 B1**
(45) Veröffentlichungstag und Bekanntmachung des Hinweises auf die Patenterteilung: **27.09.2006**
(21) Anmeldenummer: 04734968.3
(22) Anmeldetag: 27.05.2004
(51) Int. Cl.: B29C 65/50, B66B 23/24, F16G 3/10, B29D 29/06

(54) **SPLEISSKONSTRUKTION FÜR LÄNGSPROFILE**
SPLICING CONSTRUCTION FOR LONGITUDINAL PROFILES
STRUCTURE DE RACCORDEMENT POUR PROFILES LONGITUDINAUX

(30) Priorität: 28.05.2003 AT 8252003
(43) Veröffentlichungstag der Anmeldung: 22.02.2006
(73) Patentinhaber: Semperit Aktiengesellschaft Holding, 1031 Wien (AT)
(72) Erfinder: DÜRRER, Albrecht, A-2540 Bad Vöslau (AT); IMNITZER, Johann, A-2632 Wimpassing (AT)
(74) Vertreter: Secklehner, Günter
(86) Internationale Anmeldenummer: PCT/AT2004/000182
(87) Internationale Veröffentlichungsnummer: WO 2004/106039

(56) Entgegenhaltungen:
- EP-A- 0 185 006
- EP-A- 0 273 479
- EP-B- 1 112 219
- DE-A- 19 641 502
- GB-A- 1 399 943
- GB-A- 2 232 636
- US-A- 2 182 169
- US-A- 3 481 807
- US-A- 3 620 346
- US-A- 3 693 218
- US-A- 3 783 063
- US-A- 3 783 704
- US-A- 4 050 322
- US-A- 4 618 387
- US-A- 5 083 985
- US-A- 6 086 806

## Beschreibung

Die Erfindung betrifft ein endloses, bandförmiges Zugelement für eine Fördereinrichtung mit zumindest einer Verbindungsstelle umfassend ein Elastomer, insbesondere ein vemetztes und/oder thermoplastisches Elastomer, zumindest eine Verstärkungslage und gegebenenfalls zumindest einen Zugträger, wobei an der zumindest einen Verbindungsstelle zwei Enden der zumindest einen Verstärkungslage angeordnet sind, eine Fördereinrichtung mit einem umlaufenden, endlosen, bandförmigen Zugelement und einer mit dem Zugelement in Wirkverbindung stehenden Antriebseinrichtung sowie ein Verfahren zur Herstellung eines endlosen, bandförmigen Zugelementes bei dem aus einem Elastomer ein Zugelementprofil hergestellt wird, auf diesen bzw. in diesen eine Verstärkungslage angeordnet wird und diese daran anschließend durch Temperaturbehandlung miteinander verbunden werden und deren Verwendung.

Bandförmige Zugelemente mit unterschiedlichsten Querschnittsformen (vor allem Flach- bzw. C-, O-, U-, V-, W- oder T- förmige Profile) sind aus zahlreichen Anwendungen, wie z.B. Förderbänder für Gegenstände oder Personen, Handläufe für Fahrtreppen bzw. Fahrsteige oder dgl., bekannt. Typische Einsatzmöglichkeiten sind z.B. auch Riemen oder Bänder, wobei diese in vielen Fällen zur Übertragung von Antriebsleistung oder zum Materialtransport genutzt werden.

Förderbänder bestehen bekanntlich aus einem umlaufenden Endlosband, welches zum Teil von Umlenkrollen, welche an den beiden einander gegenüberliegenden Endbereichen des Bandes angeordnet sind, getragen wird. In Bandförderern werden bislang eigene Führungsrollen dafür eingesetzt, um ein seitliches Auswandern des Bandes zu verhindern. Die endlosen Förderbänder bestehen zumeist aus einem Materialverbund zwischen Gummi und/oder Kunststoff mit Geweben und weisen zur Verstärkung Gewebe, Gewirke oder Stahleinlagen, sowie je nach Einsatzbereich, einen oder mehrere Zugträger zur Erhöhung der Bruchfestigkeit in Richtung der auftretenden Belastungen auf. Durch die Generierung des Endlosbandes entsteht zumindest eine Verbindungsstelle der beiden gegenüberliegenden Enden des Bandes.

Handläufe für Fahrtreppen, Fahrsteige oder ähnliche Anwendungen werden als Sicherheitselemente für den Personentransport verwendet. Dazu muss der Handlauf dem Fahrgast einen sicheren Griff ermöglichen und den dynamischen Beanspruchungen bzw. den Umwelteinflüssen während des Betriebes gerecht werden, ohne dabei beschädigt zu werden. Aus dem Stand der Technik bekannte endlose Handläufe weisen unterschiedliche Verbindungsmöglichkeiten auf und sind üblicherweise aus einer Vielzahl von unterschiedlichen Materialien aufgebaut, um diese Erfordernisse zu erfüllen. Die vom Fahrgast berührbare Handlaufoberfläche besteht üblicherweise aus einer Elastomermischung. Die Handlaufdecke schützt darüber hinaus alle darunter liegenden Bauteile vor diversen Umwelteinflüssen und muss daher gegen diese beständig sein. Zur Erhöhung der Dimensionsstabilität des Handlaufquerschnittes werden üblicherweise Verstärkungseinlagen, z.B. Gewebe, Gewebecorde, kurzfaserverstärkte Mischungen, etc. eingesetzt. Es wird erwartet, dass der Handlauf eine möglichst lange Lebensdauer aufweist.

Des weiteren enthält der Handlauf in seinem Querschnitt zur Aufnahme von Längskräften sogenannte Zugträger, die eine definierte Mindestreißfestigkeit auch im Stoßbereich aufweisen müssen.

Schließlich bildet die sogenannte Gleitlage die Kontaktfläche des Handlaufes zur Handlaufführung bzw. zum Handlaufantriebssystem.

Bekannt sind auch Zugelemente, die im Kunststoffextrusionsverfahren hergestellt werden.

All diesen Zugelementen gemeinsam ist die Eigenschaft, dass bei Biegungen jene Komponenten besonders stark beansprucht werden, die den größten Abstand zur neutralen Achse aufweisen.

Geht man in diesem Zusammenhang von einem offenen Profil mit dem erwähnten C-Querschnitt aus, so erkennt man, dass vor allem die Gewebeschicht an den exponierten Stellen besonderen Beanspruchungen unterliegt. Bekannte Belastungen sind Biegewechsel unterschiedlichster Frequenzen, wobei die Biegeradien ein einstelliges Vielfaches der Bauteilhöhe sein können. Diese Biegungen erfolgen unter angelegten Axialspannungen. Die Hauptanforderungen Flexibilität und Maßhaltigkeit müssen dabei in eng spezifizierten Toleranzfelder liegen, da der Bauteil strengen Sicherheitsauflagen unterliegt.

Der Umstand, dass eine maximale Steifigkeit des Bauteiles bei vorgeschriebenen Biegeradien zu keiner Toleranzüber- bzw. -unterschreitung führen darf, bewirkt extreme Spannungszustände, wobei diese 3-dimensional wirkenden Kräfte an die schwächste Stelle des Materialverbundes abgeleitet werden. Diese sind in der Regel überall dort zu finden, wo Stoß-/Spleißstellen - vor allem bei Gewebelagen - auftreten.

Um diesem Umstand Rechnung zu tragen, sind aus dem Stand der Technik bereits aufwendige Spleißkonstruktionen zur Minimierung möglicher Schadstellen bekannt. Beispielsweise werden die beiden Enden einer Gewebebahn schräg geschnitten und in einem Bereich überlappt und in diesem Überlappungsbereich miteinander verbunden, wie z.B. verklebt.

Aus dem Stand der Technik sind unterschiedliche Verbindungsstellen zweier Enden eines Endlosgurts bekannt. So ist beispielsweise aus der US 6,086,806 die Verbindung zweier Enden eines Endlosgurtes mittels Fingerverbindungsprinzip beschrieben. Auch aus der US 5,083,985 ist die Fingerverbindungstechnik beschrieben. In der EP 0 185 006 A1 wird die Fingerverbindung in Kombination mit einer Zwischenplatte, welche die Fingerverbindungsstelle abdeckt, beschrieben.

Eine Verbindung zweier Enden eines Endlosgurtes mittels eines Zwischenstückes bzw. Abdeckstückes ist beispielsweise aus der US 4,618,382 bekannt. Es werden hierbei die Enden des Endlosgurtes und die Enden des Zwischenstückes aneinander gefügt. Zu dem wird beschrieben, dass in einem Bereich Ausnehmungen angeordnet sein können, in welchen Zugträger eingefügt werden. Aus der EP 0 273 479 A1 ist ebenfalls die Verwendung eines Zwischenstückes zwischen zwei Enden eines Endlosgurtes beschrieben, wobei das Zwischenstück an die Enden des Gurtes anstößt und dabei einen Winkel von 45 ° bildet. Aus der GB 2 232 636 A ist ein Schleifpapier bekannt, welches ebenfalls endlos hergestellt werden kann, indem die zu aneinanderfügenden Enden über einen Heißkleber miteinander verbunden werden. Um beliebig lange Gurte herstellen zu können, ist in der US 3,783,063 eine Methode beschrieben, bei welcher die Verbindungsstellen des Gurtes über longitudinal oder transversal angeordnete Zwischenstücke abgedeckt werden.

Aus dem Stand der Technik ist eine weitere Methode zur Verbindung von Enden eines Endlosgurtes bekannt. Hierbei werden benachbart zur Verbindungsstelle Metallstäbe bzw. Metallstränge, Drähte oder dgl. angeordnet, um eine Zugentlastung auf die Verbindungsstelle zu ermöglichen. Dies ist beispielsweise in der US 3,783,704, US 3,693,218 und der US 4,050,320 beschrieben.

Aufgabe der Erfindung ist es, die Lebensdauer von bandförmigen Zugelementen zu verlängern. Eine Teilaufgabe der Erfindung ist weiters, die Ausfallwahrscheinlichkeit im Betrieb des Zugelementes aufgrund von Brüchen an den Verbindungsstellen des Gewebes zu minimieren.

Die Aufgabe der Erfindung wird jeweils eigenständig durch ein eingangs erwähntes endloses bandförmiges Zugelement für eine Fördereinrichtung, wobei an der Verbindungsstelle zwischen den zwei Enden ein Einsatzstück in einem Winkel α in bezug auf die Zugselementlängserstreckung angeordnet ist, wobei die Enden der zumindest einen Verstärkungslage überlappend mit dem Einsatzstück angeordnet sind, durch eine eingangs erwähnte Fördereinrichtung, durch ein Verfahren zur Herstellung eines endlosen, bandförmigen Zugelementes, wobei zur Ausbildung des Endlosbandes an der Verbindungsstelle zwischen den beiden Enden der Verstärkungslage ein Einsatzstück in einem Winkel α in bezug auf die Zugelementlängserstreckung eingesetzt wird und wobei die Enden der zumindest einen Verstärkungslage überlappend mit dem Einsatzstück angeordnet und verbunden werden und die Verwendung desselben. Vorteilhaft daran ist, dass sich die Lebensdauer des Zugelementes erheblich verlängert, weil die Verbindungsstellen höheren mechanischen Beanspruchungen standhalten und dadurch eine hohe Betriebssicherheit gewährleistet werden kann. Weiters erweist sich von Vorteil, dass sowohl eine hohe Flexibilität als auch Maßhaltigkeit in endspezifizierten Toleranzfeldern des Zugelementes gewährleistet sind.

Weiters erweist sich als vorteilhaft, dass der Winkel α aus einem Bereich mit einer unteren Grenze von 25 °, vorzugsweise 30 °, insbesondere 35 ° und einer oberen Grenze von 75 °, vorzugsweise 70 °, insbesondere 65 ° ausgewählt ist, insbesondere 45 ° beträgt, wodurch die Bruchfestigkeit des Zugelementes in Hinblick auf die auftretenden Belastungen steigt.

In einer Ausführungsvariante ist vorgesehen, dass die Breite des Einsatzstückes aus einem Bereich mit einer unteren Grenze von 3 cm, vorzugsweise 5 cm, insbesondere 10 cm und einer oberen Grenze von endlos vorzugsweise 2 m, insbesondere 50 cm ausgewählt ist, insbesondere 15 cm beträgt, wodurch über die gesamte Länge des Zugelementes eine möglichst gleichmäßige Dicke des Zugelementquerschnitts erzielt wird und daraus eine regelmäßige Oberfläche resultiert, welche das Anfassgefühl des Zugelementes, insbesondere des Handlaufs, verbessert.

In einer Weiterbildung des Zugelementes ist vorgesehen, dass die Breite der Überlappung aus einem Bereich mit einer unteren Grenze von 3 mm, vorzugsweise 5 mm, insbesondere 8 mm und einer oberen Grenze von 1 m , vorzugsweise 50 cm, insbesondere 10 cm ausgewählt ist, insbesondere 12 mm beträgt, wodurch nur über eine, im Verhältnis zur gesamten Länge des Zugelementes, geringe Länge eine mehrlagige bezüglich des Einsatzstückes und der Enden des Verstärkungselementes Anordnung im Zugelement entsteht und dadurch eine geringe Vergrößerung der Höhe des Zugelementes bewirkt wird.

Weiters erweist sich als vorteilhaft, dass der Überlappungsbereich zwischen der Gewebelage und dem Elastomer liegt, insbesondere an der in Einbaulage des Zugelementes nicht sichtbaren Seite liegt, vorzugsweise aber an der einer Antriebseinrichtung zugewandten Seite, wodurch die Bruchfestigkeit und somit Lebensdauer des Zugelementes zusätzlich erhöht werden kann.

Die Verstärkungslage kann zumindest bereichsweise eine Gleitlage bzw. eine Versteifungslage sein, wodurch einerseits eine verbesserte Fortbewegung des Zugelementes auf einer Antriebseinrichtung gegeben ist bzw. die Verformbarkeit des Zugelementes in Grenzen gehalten wird und somit die Maßhaltigkeit gewährleistet ist. Weiters erweist sich von Vorteil, dass durch die Anordnung der Gleitlage die Gleitreibung gegenüber der Führungseinrichtung nicht so hoch ist und dennoch die Haftreibung für eine Antriebseinrichtung ausreichend ist.

Weiters erweist sich von Vorteil, dass die Verstärkungslage zumindest bereichsweise von einem Gewebe und/oder Gewirke gebildet ist, wodurch die hohen mechanischen Beanspruchungen ausgeglichen werden können bzw. hohe Belastungen Stand gehalten wird und somit die Reißfestigkeit des Zugelementes erhöht wird und dennoch die Flexibilität des Zugelementes nicht eingeschränkt wird.

In einer Weiterbildung wird die Gleitlage zumindest bereichsweise aus einem Gewebe aus synthetischen Fasern, z.B. Polyamid, Polyester, etc. und/oder aus natürlichen Fasern, z.B. Baumwolle, oder Mischungen, daraus gebildet, wodurch sowohl einerseits die Gleitreibung gegenüber der Führungseinrichtung nicht so hoch ist und andererseits die Haftreibung für eine Antriebseinrichtung ausreichend groß ist.

Weiters erweist sich von Vorteil, dass die Verstärkungslage zwischen den beiden Enden von einer durchgehenden Gewebebahn gebildet ist, wodurch die Anzahl der Verbindungsstellen so niedrig wie möglich gehalten werden kann und dadurch die potentiellen Bruchstellen minimiert werden. Weiters erweist sich von Vorteil, dass die Herstellung des Zugelementes vereinfacht werden kann und dadurch eine Kostenreduktion erzielt wird.

Von Vorteil ist auch, dass die Verstärkungslage einen Kontakt zu einer Führungs- oder Antriebseinrichtung bildet, wodurch eine hohe Maßhaltigkeit einerseits gewährleistet werden kann und andererseits der Antrieb des bandförmigen Zugelementes ohne zusätzliche Elemente zwischen der Antriebseinrichtung und der Verstärkungslage möglich ist.

In einer Weiterbildung ist vorgesehen, dass das Gewebe aus Kett- und Schussfäden gebildet ist, woraus eine höhere Belastbarkeit des endlosen bandförmigen Zugelementes resultiert. Weiters erweist sich dabei von Vorteil, dass beispielsweise durch die Verwendung des gleichen Gewebes für die Verstärkungslage und das Einsatzstück eine vorbestimmbare Anordnung der Kettfadenrichtungen der Verstärkungslage und des Einsatzstückes ermöglicht wird.

Gemäß einer Weiterbildung ist vorgesehen, dass zwischen dem Einsatzstück und der Verstärkungslage zumindest eine Zwischenschicht, insbesondere eine Zwischenplatte, angeordnet ist, wodurch ein zusätzliches Verbindungselement zwischen den beiden Endstücken des Zugelementes angeordnet werden kann und dadurch die Verbindung verbessert wird und dadurch dauerhafter ist.

In einer weiteren Ausführungsvariante ist vorgesehen, dass die gegenüberliegenden Enden des zumindest einen Verstärkungselementes eine Zahnung aufweisen, wonach dadurch eine Verbesserung der kraft- und/oder formschlüssigen Übertragung der Bewegungsenergie über die gesamte Länge des Zugelementes bewirkt wird und dadurch die Bruchfestigkeit der Verbindungsstelle erhöht werden kann.

Der Zugträger kann ein Stahlcord, ein Stahlblech oder ein Aramidcord, oder dgl. sein, wodurch auf das Zugelement wirkende Längskräfte aufgenommen werden können. Weiters ist möglich, diese als Angriffspunkt für die Antriebseinrichtung verstärkt auszuführen.

Von Vorteil ist auch, dass in und/oder am Zugelement ein magnetisches bzw. magnetisierbares Element angeordnet ist, weil dadurch eine Antriebseinrichtung verwendet werden kann, bei welcher auf einen Großteil von Verbindungselementen mit dem Zugelement und auf einen Großteil an mechanisch beweglichen Elementen verzichtet werden kann.

Weiters ist vorgesehen, dass zumindest teilweise ein polymerer Werkstoff, z.B. thermoplastisches Elastomer, wie TPE, z.B. TPE-U, TPE-V, TPE-O, TPE-S, TPE-A, TPE-E, etc., oder ein Elastomer, wie Gummi, Latices, etc. das Zugelement bildet, wodurch das Zugelement kostengünstig hergestellt werden kann und die Werkstoffe in Verbindung mit der Erfindung eine lange Lebensdauer des Zugelementes ermöglichen.

Gemäß einer Weiterbildung ist vorgesehen, dass der Zugträger und/oder zumindest die Verstärkungslage und/oder das thermoplastische Elastomer bzw. Kunststoff durch Pressvulkanisation oder durch Extrusion hergestellt ist, wodurch die Form des Zugelementes nur geringe Toleranzen aufweist. Weiters wird dabei auch eine gute Stabilisierung der einzelnen Bestandteile des Zugelementes bewirkt.

In einer Weiterbildung des Verfahrens ist vorgesehen, dass das Einsatzstück aus der Verstärkungslage gebildet wird, insbesondere durch Abtrennen eines Endstückes derselben, woraus eine höhere Belastbarkeit des endlosen bandförmigen Zugelementes resultiert, weil die Kettfäden der Verstärkungslage und des Einsatzstückes ebenfalls den Winkel α einschließen bzw. die Lagerhaltung für die Herstellung des Zugelementes vereinfacht ist, da auf zusätzliche Bauteile für die Verstärkungslage verzichtet werden kann.

Von Vorteil erweist sich auch, dass die Enden der Verstärkungslage mit dem Einsatzstück verklebt und/oder genäht und/oder verschweißt und/oder verschmolzen und/oder geklammert werden, weil dadurch die Bruchfestigkeit des Zugelementes erhöht wird und damit eine universelle Verbindungsmethode, die an die jeweiligen Gegebenheiten angepasst werden kann, zur Verfügung steht, sodass die Assemblierung des Zugelementes direkt am Verwendungsort desselben erfolgen kann, und die Verbindungsstelle gegebenenfalls lösbar ausgebildet ist.

Vorteilhaft ist aber auch die Verwendung des endlosen bandförmigen Zugelementes als Förderband, insbesondere für einen Bandförderer bzw. als Handlauf für eine Fahrtreppe oder einen Fahrsteig, weil dadurch ein System mit einer hohen Betriebssicherheit zur Verfügung gestellt wird, welches zudem eine lange Lebensdauer aufweist.

Die Erfindung wird im nachfolgenden anhand der in den Zeichnungen dargestellten Ausführungsbeispiele näher erläutert.

Es zeigen:
- Fig. 1: eine schematische Darstellung der Stoßkonstruktion;
- Fig. 2: einen Schnitt durch die Stoßkonstruktion;
- Fig. 3: einen Querschnitt eines erfindungsgemäßen Zugelementes in Form eines Handlaufs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

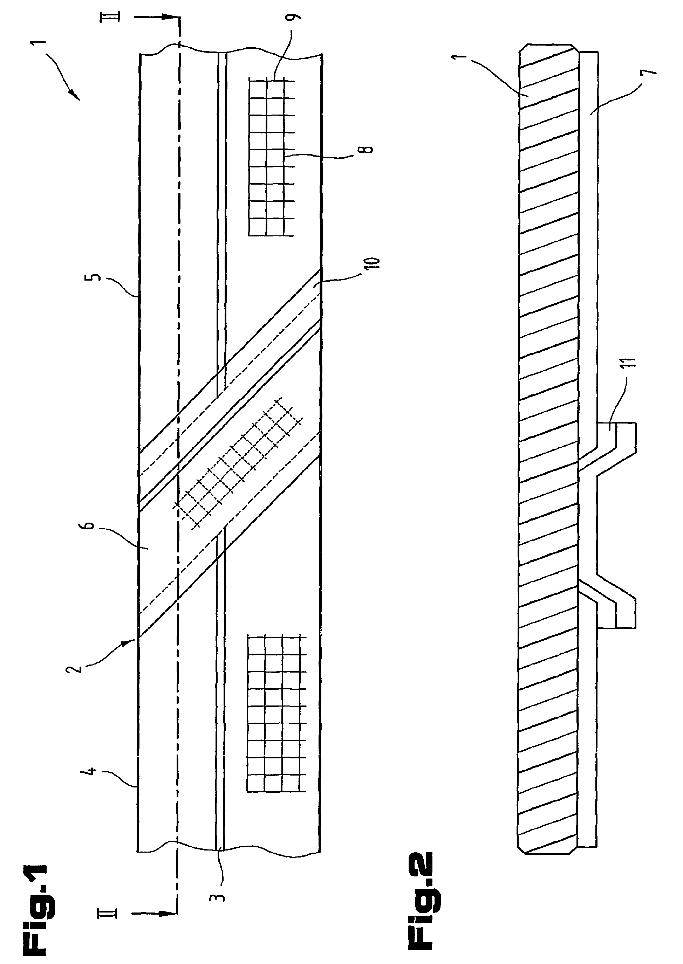

Fig. 1 zeigt einen Ausschnitt aus einem endlosen bandförmigen Zugelement 1, wobei eine Detailansicht der Verbindungsstelle 2 zwischen den beiden Enden des Zugelementes 1 schematisch dargestellt ist.

Das Zugelement 1 besteht aus einem Elastomer, insbesondere einem thermoplastischen Elastomer, an bzw. in dem zumindest eine Verstärkungslage angeordnet, insbesondere mit dem Elastomer verbunden ist. Gegebenenfalls kann zur Erhöhung der durch das Zugelement 1 aufnehmbaren Kräfte, wie z.B. Reißfestigkeit, zumindest ein Zugträger 3 (in Fig. 1 nicht dargestellt) am bzw. vorzugsweise im Elastomer angeordnet sein.

Die Verstärkungslage ist normalerweise herstellungsbedingt als endloses Band ausgebildet und weist daher zwei einander gegenüberliegende Enden auf, die für die Herstellung des endlosen Zugelementes 1 miteinander verbunden werden müssen.

Die beiden gegenüberliegenden Enden der Verstärkungslage, die aus einem Gewebe gebildet sein kann, werden als Abschnitt A1 4 und als Abschnitt A2 5 bezeichnet. Ist die Verstärkungslage durchgehend ausgebildet, können dargestellte Abschnitte A1 4 und A2 5 der Verstärkungslage auch aus einer durchgehenden Gewebebahn gefertigt sein, wodurch der Abschnitt A1 4 gleich Abschnitt A2 5 ist, d.h. nur ein Abschnitt A1 4 oder A2 5 vorliegt.

Erfindungsgemäß ist zwischen dem Abschnitt A1 4 und dem Abschnitt A2 5 ein Einsatzstück 6 angeordnet.

Das Längenverhältnis der einzelnen Abschnitte A1 4 und A2 5 der Verstärkungslage ist frei wählbar, d.h. der Abschnitt A 14 kann größer als das Einsatzstück 6 sein bzw. das Einsatzstück 6 kann größer sein als der Abschnitt A1 4. Das gleiche trifft für den Abschnitt A2 5 zu.

Zur Klarstellung sei darauf hingewiesen, dass, wie oben ausgeführt, die Verstärkungslage mehrstückig ausgebildet sein kann, woraus mehrere Verbindungsstellen 2 resultieren und sich die Längenangabe der Abschnitte auf diese Mehrstückigkeit bezieht.

Die Verstärkungslage kann zumindest bereichsweise als Gleitlage 7 ausgebildet sein.

Für die Verstärkungslage kann anstelle des Gewebes auch ein Gewirke, Geflecht, etc., verwendet werden.

Das für Fig. 1 beschriebene Gewebe besteht aus längsverlaufenden Schussfäden 9 und dazu quer verlaufenden Kettfäden 8, die vorzugsweise im rechten Winkel zueinander stehen. Andere Winkelverhältnisse, wie beispielsweise rautenförmig zueinander ausgebildete Kett- und Schussfäden 8, 9 sind denkbar, sodass also die vorzugsweise Rechtwinkeligkeit nicht limitierend für den Schutzumfang der Erfindung zu verstehen ist.

Das Einsatzstück 6 besteht vorzugsweise auch aus einem Gewebe aus Kett- und Schussfäden 8, 9. Erfindungsgemäß wird es in einem Winkel α in Bezug auf die Zugselementlängserstreckung bzw. Kettfadenrichtung eingesetzt.

Zwischen dem Abschnitt A1 4 bzw. dem Abschnitt A2 5 und dem Einsatzstück 6 wird an der jeweils dem Abschnitt A1 4 bzw. dem Abschnitt A2 5 zugewandten Seite ein Überlappungsbereich 10 ausgebildet.

Die Breite des Überlappungsbereiches 10 zwischen den Abschnitten A1 4 und A2 5 und dem Einsatzstück 6 kann variabel sein, wird aber vorzugsweise aus einem Bereich mit einer unteren Grenze von 3 mm, vorzugsweise 5 mm, insbesondere 8 mm und einer oberen Grenze von 1 m , vorzugsweise 50 cm, insbesondere 10 cm ausgewählt ist, und kann insbesondere 12 mm betragen.

Wie in Fig. 2 dargestellt, kann im Überlappungsbereich 10 zwischen dem Abschnitt A1 4 bzw. A2 5 eine Zwischenplatte 11 eingefügt werden. Diese Zwischenplatte 11 dient als zusätzliches Verbindungselement zwischen dem Einsatzstück 6 und den Abschnitten A1 4 und A2 5. Die Zwischenplatte 11 kann beispielsweise eine Gummischicht bzw. eine Platte aus einem beliebigen elastomeren bzw. thermoplastischem Material, wie z.B. NR, CR, SBR, T-PES. Als alternative Kleber können beispielsweise auch andere zäh-elastische Kleber wie z.B. solche auf Epoxy-, Metacrylat-, Polyurethanbasis, etc., verwendet werden. Zusätzlich oder als Alternativen zu dieser Verklebungsart kann die Verbindung der Abschnitte A1 4 und A2 5 und dem Einsatzstück 6 auch über genähte Stöße, Verschweißungen, Verschmelzungen und/oder Klammern, gebildet werden. Derartige Spleißverbindungen können sowohl bei Handläufen aus klassischen vernetzten Elastomeren, als auch aus thermoplastischen Elastomeren durchgeführt werden.

Die Garne der Gewebestücke können sowohl aus synthetischen Fasern, wie z.B. Polyamid oder Polyester, etc. und/oder auch aus Naturfasern, wie z.B. Baumwolle, Sisal, Hanf, hergestellt sein.

Zwischen den Kanten der Abschnitte A1 4 und A2 5 und den Kanten des Einsatzstückes 6 wird ein Winkel β ausgebildet. Die Dimensionen des Winkel β sind variabel, wobei sie vorzugsweise aus einem Bereich mit einer oberen Grenze von weniger als 90°, insbesondere 45°, ausgewählt sind und einer unteren Grenze von 30°, vorzugsweise 35°, insbesondere 45°.

Der Winkel zwischen der Zugselementlängsachse und der Einsatzstücklängsachse wird als Winkel α bezeichnet. In einer bevorzugten Ausführungsvariante beträgt der Winkel α 45 °, wobei geringfügige Abweichungen, welche produktionstechnisch, z.B. durch die Schneidetechnik verursacht sind, auftreten können. Die Kettfadenrichtungen der Abschnitte A 1 4 und A2 5 und die Kettfadenrichtung des Einsatzstückes 6 stehen ebenfalls im Winkel α zueinander. Dieser Winkel α weist vorzugsweise einen Wert kleiner als 90 ° auf.

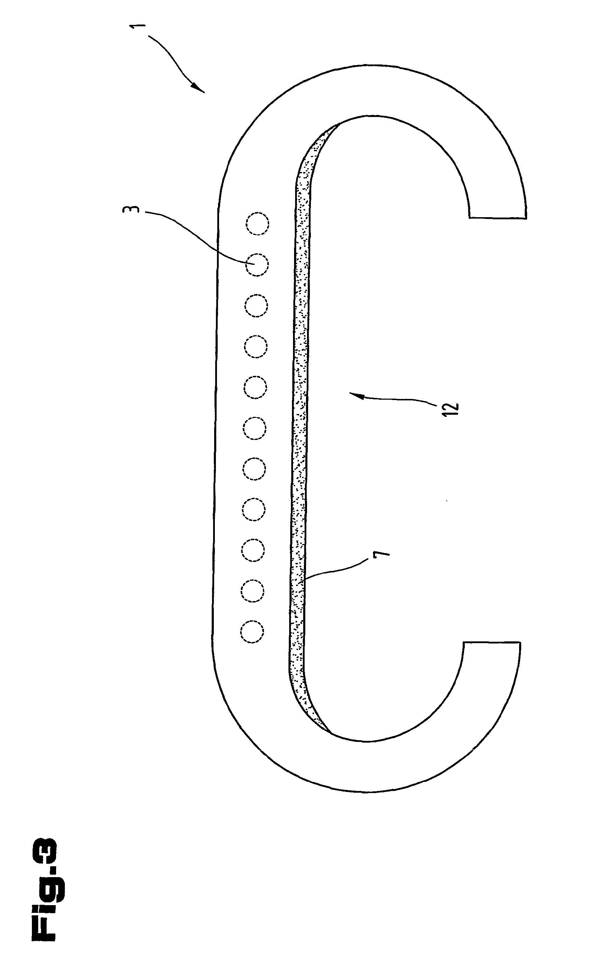

Das durch die erfindungsgemäße Verbindungsmethode endlose bandförmige Zugelement 1 kann als Handlauf, wie in Fig. 3 dargestellt, für Fahrtreppen, Fahrsteige und dgl. verwendet werden. Für derartige Handläufe ist es üblich z.B. oben genannte Zugträger 3 aus einem Stahlcord/-band und/oder Aramidcord einzusetzen. Weiters können gegebenenfalls zusätzliche Gewebelagen, wie z.B. Versteifungseinlagen, Gleitlagen 7, etc., angeordnet sein, wobei diese auch durch die oben genannte Verstärkungslage gebildet werden können.

Als Elastomer kann ein polymerer Werkstoff, z.B. thermoplastisches Elastomer, wie TPE, z.B. TPE-U, TPE-V, TPE-O, TPE-S, TPE-A, TPE-E, etc., oder aber Gummi, verschiedenste Latices, etc. verwendet werden.

Ein derartiger Aufbau für einen Handlauf wird in der EN 115 als "mitlaufendes Band, dass zum Festhalten der für die Fahrgäste bestimmt ist" definiert.

Die Gleitlage 7 kann einerseits in einer Führungseinrichtung laufen und steht dadurch zumindest teilweise im direkten Kontakt mit dieser und andererseits kann die Gleitlage 7 auch in Kontakt mit der Zugelementantriebseinrichtung stehen.

Die Gleitlage 7 kann eine bestimmte Nachgiebigkeit in Längsrichtung, d.h. in Förderrichtung, aufweisen, um die Flexibilität des Zugelementes 1 zu verbessern. Die Gleitlage 7 weist einerseits einen geringen Gleitreibungswert gegenüber der Führungseinrichtung und andererseits einen genügend hohen Haftreibungswert gegenüber der Antriebseinrichtung auf, um den problemlosen Antrieb des Zugelementes 1 zu gewährleisten.

Die Enden der Abschnitte A1 4 und A2 5 bzw. die Begrenzungen des Einsatzstückes 6 müssen keine glatten Ränder aufweisen, sondern können beispielsweise auch eine Zahnung aufweisen, wodurch ein besseres Ineinandergreifen der Ränder der Gewebeabschnitte A1 4 und A2 5 bzw. des Einsatzstückes 6 erzielt wird.

Zur besseren Kontaktierung zwischen dem Zugelement 1 und der Antriebseinrichtung kann ein magnetisches bzw. magnetisierbares Element in das Zugelement 1 eingefügt werden.

Das Zugelement 1 kann auch einen Zugträger 3, welcher zur Aufnahme von durch die Antriebseinrichtung auf das Zugelement 1 wirkenden Längskräfte dient, aufweisen. Der Zugträger 3 weist eine definierte Mindestreißfestigkeit auf. Als Werkstoff für diesen Zugträger 3 sind je nach Antriebseinrichtung unterschiedliche Materialien möglich, wie z.B. Stahl, Aramidcorde, Stahlbänder, etc. Der Zugträger 3 kann einteilig oder auch mehrteilig ausgeführt sein, beispielsweise durch zumindest annähernd in Förderrichtung parallel zueinander angeordneten Drahtelementen. Die Zugträger 3 können sowohl im als auch am Zugelement 1 angeordnet sein.

Weitere Verstärkungseinlagen, die in Handläufen nach dem Stand der Technik zur Erhöhung der Dimensionsstabilität dienen, wie z.B. Gewebecorde oder dgl., werden vielfach eingesetzt, sodass weder eine Vergrößerung noch eine Verringerung des Querschnittes bewirkt wird. Damit können in vorteilhafter Weise sowohl Lärmentwicklungen beim Kontakt der Führungseinrichtung sowie übermäßige Wärmeentwicklung vermieden werden, sodass daraus resultierende Antriebsprobleme und schließlich die Zerstörung des Zugelementes 1 weitestgehend verhindert werden kann. Zudem kann durch die Vermeidung der Vergrößerung des Zugelementes 1 auch verhindert werden, dass sich Individuen im resultierenden Zwischenraum zwischen dem Zugelement 1 und einer dieses führenden Einrichtung einklemmen.

Die Gleitlage 7 erstreckt sich zumindest über einen Großteil des Zugelementes 1.

Für die dynamische Prüfung des Zugelementes 1 wird eine eigens hierfür entwickelte Vorrichtung in einer Klimakammer verwendet. Getestet wurde auf einem speziell für flexible Längsprofile mit C-förmigem Querschnitt entwickelten Prüfstand mit unterschiedlichen Biegedurchmessem. Die Profillänge am Prüfstand beträgt ca. 17m. Der Prüfstand ist mit 4 Rädern, wobei 2 Räder einen Durchmesser von 780 mm und zwei Räder einen Durchmesser von 550 mm aufweisen, einer Rolle mit einem Durchmesser von 70 mm und einem Rollenbogen (r-450 mm; Rollendurchmesser beträgt 70 mm) ausgestattet. Die Prüfgeschwindigkeit beträgt 5 m/sec. Der minimale Biegeradius beträgt 275 mm sowohl bei positiver als auch negativer Biegung, bei einer Biegefrequenz von 0,2 Hz, was wiederum 12 Biegungen pro Minute entspricht. Es wurden insgesamt 1,5 Mio. Biegezyklen getestet, bei einer Ozonkonzentration von 20 pphm, einer Vorspannung im Profil von 2000 N, einer Umgebungstemperatur von 45 ° C und einer relativen Luftfeuchte von 90 %. Mittels dieses Prüfstands wird getestet, wie vielen Biegezyklen die erfindungsgemäße Verbindungsstelle 2 des Zugelementes 1 standhält. Dabei hat sich herausgestellt, dass die Anzahl der Biegezyklen der erfindungsgemäßen Verbindung weit über dem Wert welcher bei aus dem Stand der Technik bekannten Zugelementen 1 erreicht werden kann. Mit dem erfindungsgemäßen endlosen, bandförmigen Zugelement 1 ist eine Prüfdauer von über 2000 Stunden getestet worden, bei welcher noch keinerlei Verschleißerscheinungen der Verbindungsstelle 2 zu beobachten waren.

Das Einsatzstück 6 kann sowohl von unten als auch von oben eingesetzt werden. In einer bevorzugten Ausführungsvariante ist das Gewebestück außen, d.h. zur Führungsschiene hin, bzw. der Unterseite 12 des Zugelementes 1 zugewandten Seite angeordnet, wie dies in Fig. 3 dargestellt ist. In einer alternativen Ausführungsvariante kann das Einsatzstück 6 im Überlappungsbereich 10 mit dem Abschnitt A1 4 innen und im Überlappungsbereich 10 mit dem Abschnitt A2 5 außen angeordnet sein, bzw. auch umgekehrt. Vorstellbar ist selbstverständlich auch, dass das Einsatzstück 6 nur innen angeordnet ist, d.h. zum Elastomer hin.

Anstelle der Gewebelage kann auch ein Gewirke aufgebracht werden. Um die Zugfestigkeit des Gewirkes zu erhöhen, kann dieses beispielsweise über ein Gitter aufgetragen werden und anschließend in das oder auf das Zugelement 1 aufgesetzt werden.

Der Ordnung halber sei abschließend darauf hingewiesen, dass zum besseren Verständnis des Aufbaus des Zugelementes 1 diese bzw. deren Bestandteile teilweise unmaßstäblich und/oder vergrößert und/oder verkleinert dargestellt wurden.

## Patentansprüche

1. Endloses, bandförmiges Zugelement (1) für eine Fördereinrichtung mit zumindest einer Verbindungsstelle (2) umfassend ein Elastomer, insbesondere ein vemetztes und/oder thermoplastisches Elastomer, zumindest eine Verstärkungslage aus einem Gewebe aus Kett- und Schussfäden (8, 9) und gegebenenfalls zumindest einen Zugträger (3), wobei an der zumindest einen Verbindungsstelle (2) zwei Enden der zumindest einen Verstärkungslage angeordnet sind, **dadurch gekennzeichnet, dass** an der Verbindungsstelle (2) zwischen den zwei Enden ein Einsatzstück (6) aus einem Gewebe aus Kett- und Schussfäden (8, 9), wobei die Stellung der Kett- und Schussfäden (8, 9) des Einsatzstückes (6) in einem Winkel α aus einem Bereich mit einer unteren Grenze von 25 °, vorzugsweise 30 °, insbesondere 35 °, und einer oberen Grenze von 75 °, vorzugsweise 70 °, insbesondere 65 °, ausgewählt ist, insbesondere 45 °, in bezug auf die Zugselementlängserstreckung angeordnet ist, die Enden der zumindest einen Verstärkungslage überlappend mit dem Einsatzstück (6) angeordnet sind und die zumindest eine Verstärkungslage zumindest bereichsweise ausschließlich vom Einsatzstück (6) gebildet ist.

2. Endloses, bandförmiges Zugelement (1) nach Anspruch 1, **dadurch gekennzeichnet, dass** die Breite des Einsatzstückes (6) aus einem Bereich mit einer unteren Grenze von 3 cm, vorzugsweise 5 cm, insbesondere 10 cm und einer oberen Grenze von endlos, vorzugsweise 2 m, insbesondere 50 cm, ausgewählt ist, insbesondere 15 cm beträgt.

3. Endloses, bandförmiges Zugelement (1) nach Anspruch 1 oder 2, **dadurch gekennzeichnet, dass** die Breite der Überlappung aus einem Bereich mit einer unteren Grenze von 3 mm, vorzugsweise 5 mm, insbesondere 8 mm und einer oberen Grenze von 1 m , vorzugsweise 50 cm, insbesondere 10 cm, ausgewählt ist, insbesondere 12 mm beträgt.

4. Endloses, bandförmiges Zugelement (1) nach einem der Ansprüche 1 bis 3, **dadurch gekennzeichnet, dass** der Überlappungsbereich (10) zwischen der Gewebelage und dem Elastomer liegt, insbesondere an der in Einbaulage des Zugelementes (1) nicht sichtbaren Seite, liegt vorzugsweise aber an der einer Antriebseinrichtung zugewandten Seite.

5. Endloses, bandförmiges Zugelement (1) nach einem der Ansprüche 1 bis 4, **dadurch gekennzeichnet, dass** die Verstärkungslage zumindest bereichsweise eine Gleitlage (7) bzw. Versteifungslage ist.

6. Endloses, bandförmiges Zugelement (1) nach einem der Ansprüche 1 bis 5, **dadurch gekennzeichnet, dass** die Verstärkungslage zumindest bereichsweise von einem Gewirke gebildet ist.

7. Endloses, bandförmiges Zugelement (1) nach Anspruch 5 oder 6, **dadurch gekennzeichnet, dass** die Gleitlage (7) zumindest bereichsweise ein Gewebe aus synthetischen Fasern, z.B. Polyamid, Polyester, etc. und/oder aus natürlichen Fasern, z.B. Baumwolle, oder Mischungen daraus aufweist.

8. Endloses, bandförmiges Zugelement (1) nach einem der Ansprüche 1 bis 7, **dadurch gekennzeichnet, dass** die Verstärkungslage zwischen den beiden Enden von einer durchgehenden Gewebebahn gebildet ist.

9. Endloses, bandförmiges Zugelement (1) nach einem der Ansprüche 1 bis 8, **dadurch gekennzeichnet, dass** die Verstärkungslage einen Kontakt zu einer Führungs- oder Antriebseinrichtung bildet.

10. Endloses, bandförmiges Zugelement (1) nach einem der Ansprüche 1 bis 9, **dadurch gekennzeichnet, dass** zwischen dem Einsatzstück (6) und der Verstärkungslage zumindest eine Zwischenschicht, insbesondere eine Zwischenplatte (11), angeordnet ist.

11. Endloses, bandförmiges Zugelement (1) nach einem der Ansprüche 1 bis 10, **dadurch gekennzeichnet, dass** die gegenüberliegenden Enden des zumindest einen Verstärkungselements eine Zahnung aufweisen.

12. Endloses, bandförmiges Zugelement (1) nach einem der Ansprüche 1 bis 11, **dadurch gekennzeichnet, dass** der Zugträger (3) ein Stahlcord, ein Stahlblech oder ein Aramidcord, ist.

13. Endloses, bandförmiges Zugelement (1) nach einem der Ansprüche 1 bis 12, **dadurch gekennzeichnet, dass** im und/oder am Zugelement (1) ein magnetisches bzw. magnetisierbares Element angeordnet ist.

14. Endloses, bandförmiges Zugelement (1) nach einem der Ansprüche 1 bis 13, **dadurch gekennzeichnet, dass** zumindest teilweise ein polymerer Werkstoff, z.B. thermoplastisches Elastomer wie TPE, z.B. TPE-U, TPE-V, TPE-O, TPE-S, TPE-A, TPE-E, etc., oder ein Elastomer, wie Gummi, Latices dieses bildet.

15. Endloses, bandförmiges Zugelement (1) nach einem der Ansprüche 1 bis 14, **dadurch gekennzeichnet, dass** der Zugträger (3) und/oder zumindest die Verstärkungslage, und/oder thermoplastisches Elastomer/Kunststoff durch Pressvulkanisation oder durch Extrusion hergestellt ist.

16. Fördereinrichtung mit einem umlaufenden, endlosen, bandförmigen Zugelement (1) und einer mit dem Zugelement (1) in Wirkverbindung stehenden Antriebseinrichtung, **dadurch gekennzeichnet, dass** das endlose bandförmige Zugelement (1) nach einem der Ansprüche 1 bis 15 ausgebildet ist.

17. Verfahren zur Herstellung eines endlosen, bandförmigen Zugelementes (1), bei dem aus einem Elastomer ein Zugelementprofil hergestellt wird, auf diesen bzw. in diesen eine Verstärkungslage angeordnet wird und diese daran anschließend durch Temperaturbehandlung miteinander verbunden werden, **dadurch gekennzeichnet, dass** zur Ausbildung des Endlosbandes an der Verbindungsstelle (2) zwischen den beiden Enden der Verstärkungslage ein Einsatzstück (6) aus einem Gewebe mit Kett- und Schussfäden (8, 9) wobei die Stellung der Kett- und Schussfäden (8, 9) des Einsatzstückes (6) in einem Winkel α aus einem Bereich mit einer unteren Grenze von 25 °, vorzugsweise 30 °, insbesondere 35 °, und einer oberen Grenze von 75 °, vorzugsweise 70 °, insbesondere 65 °, ausgewählt ist, insbesondere 45 °, in bezug auf die Zugelementlängserstreckung eingesetzt wird, wobei die Enden der zumindest einen Verstärkungslage überlappend mit dem Einsatzstück (6) angeordnet und verbunden werden und die zumindest eine Verstärkungslage zumindest bereichsweise ausschließlich vom Einsatzstück (6) gebildet wird.

18. Verfahren nach Anspruch 17, **dadurch gekennzeichnet, dass** das Einsatzstück (6) aus der Verstärkungslage gebildet wird, insbesondere durch Abtrennen eines Endstückes derselben.

19. Verfahren nach Anspruch 17 oder 18, **dadurch gekennzeichnet, dass** die Enden der Verstärkungslage mit dem Einsatzstück (6) verklebt und/oder genäht und/oder verschweißt und/oder verschmolzen und/oder geklammert werden.

20. Verwendung des endlosen, bandförmigen Zugelementes (1) nach einem der Ansprüche 1 bis 15 als Förderband, insbesondere für einen Bandförderer.

21. Verwendung des endlosen, bandförmigen Zugelementes (1) nach einem der Ansprüche 1 bis 15 als Handlauf für eine Fahrtreppe oder einen Fahrsteig.

## Claims

1. Endless, belt-shaped tension element (1) for a conveyor system with at least one joining point (2), comprising an elastomer, in particular a cross-linked and/or thermoplastic elastomer, at least one reinforcing layer made from a fabric incorporating warp and weft threads (8, 9) and optionally at least one tension support (3), two ends of the at least one reinforcing layer being disposed at the at least one joining point (2), **characterized in that** an insert piece (6) made from a fabric incorporating warp and weft threads (8, 9) is provided at the joining point (2) between the two ends, the warp and weft threads (8, 9) of the insert piece (6) being positioned at an angle α relative to the tension element longitudinal extension which is in a range selected so as to have a lower limit of 25 °, preferably 30 °, in particular 35 °, and an upper limit of 75 °, preferably 70 °, in particular 65 °, and more especially 45 °, the ends of the at least one reinforcing layer being disposed so as to overlap with the insert piece (6), which at least one reinforcing layer is formed exclusively by the insert piece (6) in at least certain regions.

2. Endless, belt-shaped tension element (1) as claimed in claim 1, **characterized in that** the width of the insert piece (6) is selected from a range with a lower limit of 3 cm, preferably 5 cm, in particular 10 cm, and an upper limit which is endless, preferably 2 m, in particular 50 cm, and in particular is 15 cm..

3. Endless, belt-shaped tension element (1) as claimed in claim 1 or 2, **characterized in that** the width of the overlap is selected from a range with a lower limit of 3 mm, preferably 5 mm, in particular 8 mm, and an upper limit of 1 m, preferably 50 cm, in particular 10 cm, and in particular is 12 mm..

4. Endless, belt-shaped tension element (1) as claimed in one of claims 1 to 3, **characterized in that** the overlapping region (10) between the fabric layer and the elastomer lies in particular on the non-visible side when the tension element (1) is mounted but is preferably on the side directed towards a drive system.

5. Endless, belt-shaped tension element (1) as claimed in one of claims 1 to 4, **characterized in that** the reinforcing layer is an anti-friction layer (7) or stiffening layer, at least in certain regions.

6. Endless, belt-shaped tension element (1) as claimed in one of claims 1 to 5, **characterized in that** at least certain regions of the reinforcing layer are provided in the form of a knitted fabric.

7. Endless, belt-shaped tension element (1) as claimed in claim 5 or 6, **characterized in that** at least certain regions of the anti-friction layer (7) are made from a woven fabric of synthetic fibres, e.g. polyamide, polyester, etc. and/or from natural fibres, e.g. cotton, or mixtures thereof.

8. Endless, belt-shaped tension element (1) as claimed in one of claims 1 to 7, **characterized in that** the reinforcing layer between the two ends is a continuous web of woven fabric.

9. Endless, belt-shaped tension element (1) as claimed in one of claims 1 to 8, **characterized in that** the reinforcing layer forms a contact to a guide or drive system.

10. Endless, belt-shaped tension element (1) as claimed in one of claims 1 to 9, **characterized in that** at least one intermediate layer is disposed between the insert piece (6) and the reinforcing layer, in particular an intermediate plate (11).

11. Endless, belt-shaped tension element (1) as claimed in one of claims 1 to 10, **characterized in that** the oppositely lying ends of the at least one reinforcing element have toothing.

12. Endless, belt-shaped tension element (1) as claimed in one of claims 1 to 11, **characterized in that** the tension support (3) is a steel cord, a sheet steel or an aramide cord..

13. Endless, belt-shaped tension element (1) as claimed in one of claims 1 to 12, **characterized in that** a magnetic or magnetisable element is disposed in and/or on the tension element (1).

14. Endless, belt-shaped tension element (1) as claimed in one of claims 1 to 13, **characterized in that** it is at least partially made from a polymeric material, e.g. a thermoplastic elastomer such as TPE, e.g. TPE-U, TPE-V, TPE-O, TPE-S, TPE-A, TPE-E, etc., or an elastomer such as rubber, latex materials.

15. Endless, belt-shaped tension element (1) as claimed in one of claims 1 to 14, **characterized in that** the tension support (3) and/or at least the reinforcing layer, and/or thermoplastic elastomer/plastic are made by press vulcanisation or by extrusion.

16. Conveyor system with a circulating, endless, belt-shaped tension element (1) and a drive system actively connected to the tension element (1), **characterized in that** the endless, belt-shaped tension element (1) is as claimed in one of claims 1 to 15.

17. Method of producing an endless, belt-shaped tension element (1), whereby a tension element section is made from elastomer, on which or in which a reinforcing layer is provided, the two then being joined to one another by a heat treatment, **characterized in that** in order to make the endless belt, an insert piece (6) made from fabric incorporating warp and weft threads (8, 9) is provided at the joining point (2) between the two ends, the warp and weft threads (8, 9) of the insert piece (6) being positioned at an angle α relative to the tension element longitudinal extension which is in a range selected so as to have a lower limit of 25 °, preferably 30 °, in particular 35 °, and an upper limit of 75 °, preferably 70 °, in particular 65 °, and more especially 45 °, the ends of the at least one reinforcing layer being disposed so as to overlap with the insert piece (6), which at least one reinforcing layer is formed exclusively by the insert piece (6) in at least certain regions.

18. Method as claimed in claim 17, **characterized in that** the insert (6) piece is formed by the reinforcing layer, in particular by cutting off an end piece thereof.

19. Method as claimed in claim 17 or 18, **characterized in that** the ends of the reinforcing layer are bonded and/or stitched and/or welded and/or fused and/or clamped to the insert piece (6).

20. Use of the endless, belt-shaped tension element (1) as claimed in one of claims 1 to 15 as a conveyor belt, in particular for a belt conveyor.

21. Use of the endless, belt-shaped tension element (1) as claimed in one of claims 1 to 15 as a hand rail for an escalator or a travelator.

## Revendications

1. Elément de traction en forme de bande sans fin (1), pour une installation de convoyage avec au moins un emplacement de liaison (2) comprenant un élastomère, en particulier un élastomère réticulé et/ou thermoplastique, au moins une couche de renforcement en un tissu de fils de chaîne et de trame (8,9) et le cas échéant au moins un tirant (3), où à au moins un emplacement de liaison précité (2), deux extrémités d'au moins une couche de renforcement sont disposées, **caractérisé en ce qu'**à l'emplacement de liaison (2), entre les deux extrémités, est disposée une pièce d'insertion (6) en un tissu de fils de chaîne et de trame (8,9), où la position des fils de chaîne et de trame (8,9) de la pièce d'insertion (6) est sélectionnée dans un angle α d'une plage avec une limite inférieure de 25°, de préférence de 30°, en particulier de 35°, et une limite supérieure de 75°, de préférence 70°, en particulier 65°, en particulier 45°, relativement à l'extension longitudinale de l'élément de traction, les extrémités d'au moins une couche de renforcement sont disposées en recouvrement avec la pièce d'insertion (6), et au moins une couche de renforcement précitée est formée au moins par zones exclusivement par la pièce d'insertion (6).

2. Elément de traction en forme de bande sans fin (1) selon la revendication 1, **caractérisé en ce que** la largeur de la pièce d'insertion (6) est sélectionnée dans une plage avec une limite inférieure de 3 cm, de préférence de 5 cm, en particulier de 10 cm et une limite supérieure de sans fin, de préférence de 2 m, en particulier de 50 cm, et elle est en particulier de 15 cm.

3. Elément de traction en forme de bande sans fin (1) selon la revendication 1 ou 2, **caractérisé en ce que** la largeur du recouvrement est sélectionnée d'une plage avec une limite inférieure de 3 mm, de préférence de 5 mm, en particulier de 8 mm et une limite supérieure de 1 m, de préférence de 50 cm, en particulier de 10 cm, et qu'elle est en particulier de 12 mm.

4. Elément de traction en forme de bande sans fin (1) selon l'une des revendications 1 à 3, **caractérisé en ce que** la zone de recouvrement (10) se situe entre la couche de tissu et l'élastomère, en particulier au côté non visible en position de montage de l'élément de traction (1), et qu'elle se situe de préférence au côté orienté vers une installation d'entraînement.

5. Elément de traction en forme de bande sans fin (1) selon l'une des revendications 1 à 4, **caractérisé en ce que** la couche de renforcement est au moins par zones une couche de glissement (7), respectivement une couche de renforcement.

6. Elément de traction en forme de bande sans fin (1) selon l'une des revendications 1 à 5, **caractérisé en ce que** la couche de renforcement est formée au moins par zones par un tissu à mailles.

7. Elément de traction en forme de bande sans fin (1) selon la revendication 5 ou 6, **caractérisé en ce que** la couche de glissement (7) présente au moins par zones un tissu de fibres synthétiques, par exemple polyamide, polyester, etc. et/ou en fibres naturelles, comme par exemple en coton ou en des mélanges de celles-ci.

8. Elément de traction en forme de bande sans fin (1) selon l'une des revendications 1 à 7, **caractérisé en ce que** la couche de renforcement entre les deux extrémités est formée par une bande de tissu continue.

9. Elément de traction en forme de bande sans fin (1) selon l'une des revendications 1 à 8, **caractérisé en ce que** la couche de renforcement forme un contact vers une installation de guidage ou d'entraînement.

10. Elément de traction en forme de bande sans fin (1) selon l'une des revendications 1 à 9, **caractérisé en ce que**, entre la pièce d'insertion (6) et la couche de renforcement, au moins une couche intermédiaire, en particulier une plaque intermédiaire (11), est disposée.

11. Elément de traction en forme de bande sans fin (1) selon l'une des revendications 1 à 10, **caractérisé en ce que** les extrémités opposées d'au moins un élément de renforcement présentent une denture.

12. Elément de traction en forme de bande sans fin (1) selon l'une des revendications 1 à 11, **caractérisé en ce que** le tirant (3) est une corde en acier, une tôle en acier ou une corde d'aramide.

13. Elément de traction en forme de bande sans fin (1) selon l'une des revendications 1 à 12, **caractérisé en ce qu'**un élément magnétique ou apte à être magnétisé est disposé dans et/ou à l'élément de traction (1).

14. Elément de traction en forme de bande sans fin (1) selon l'une des revendications 1 à 13, **caractérisé en ce qu'**au moins partiellement un matériau polymère, par exemple un élastomère thermoplastique tel que TPE, par exemple TPE-U, TPE-V, TPE-O, TPE-S, TPE-A, TPE-E, etc., ou un élastomère, comme le caoutchouc, le latex forment celui-ci.

15. Elément de traction en forme de bande sans fin (1) selon l'une des revendications 1 à 14, **caractérisé en ce que** le tirant (3) et/ou au moins la couche de renforcement et/ou l'élastomère thermoplastique/matériau synthétique est fabriqué par vulcanisation sous pression ou par extrusion.

16. Installation de convoyage avec un élément de traction en forme de bande sans fin tournant (1) et une installation d'entraînement fonctionnellement reliée à l'élément de traction (1), **caractérisée en ce que** l'élément de traction en forme de bande sans fin (1) est réalisé selon l'une des revendications 1 à 15.

17. Procédé de fabrication d'un élément de traction en forme de bande sans fin (1), dans lequel à partir d'un élastomère, un profil d'élément de traction est réalisé, sur celui-ci, respectivement dans celui-ci une couche de renforcement est disposée, et ensuite, ceux-ci sont reliés par un traitement à température, **caractérisé en ce que** pour la réalisation de la bande sans fin, à l'emplacement de liaison (2) entre les deux extrémités de la couche de renforcement, une pièce d'insertion (6) est mise en place constituée d'un tissu avec des fils de chaîne et de trame (8,9), où la position des fils de chaîne et de trame (8,9) de la pièce d'insertion (6) est sélectionnée dans un angle α d'une plage avec une limite inférieure de 25°, de préférence de 30°, en particulier de 35°, et une limite supérieure de 75°, de préférence de 70°, en particulier de 65°, en particulier de 45°, relativement à l'extension longitudinale de l'élément de traction, où les extrémités d'au moins une couche de renforcement sont disposées avec un recouvrement avec la pièce d'insertion (6) et sont reliées, et au moins une couche de renforcement précitée est formée au moins par zones exclusivement par la pièce d'insertion (6).

18. Procédé selon la revendication 17, **caractérisé en ce que** la pièce d'insertion (6) est formée par une couche de renforcement, en particulier par la séparation d'une pièce d'extrémité de celle-ci.

19. Procédé selon la revendication 17 ou 18, **caractérisé en ce que** les extrémités de la couche de renforcement sont collées et/ou cousues et/ou soudées et/ou fondues et/ou agrafées à la pièce d'insertion (6).

20. Utilisation d'un élément de traction en forme de bande sans fin (1) selon l'une des revendications 1 à 15 comme bande de convoyage, en particulier pour un convoyeur à bande.

21. Utilisation de l'élément de traction en forme de bande sans fin (1), selon l'une des revendications 1 à 15 comme main courante pour un escalier mécanique ou un trottoir roulant.
